(19) Europäisches Patentamt
European Patent Office
Office européen des brevets

(11) **EP 2 159 976 A1**

(12) **EUROPEAN PATENT APPLICATION**
published in accordance with Art. 153(4) EPC

(43) Date of publication:
**03.03.2010 Bulletin 2010/09**

(51) Int Cl.:
**H04L 13/08** (2006.01)

(21) Application number: **07737199.5**

(22) Date of filing: **21.05.2007**

(86) International application number:
**PCT/JP2007/000543**

(87) International publication number:
**WO 2008/142736 (27.11.2008 Gazette 2008/48)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Fujitsu Limited**
**Kawasaki-shi, Kanagawa 211-8588 (JP)**

(72) Inventor: **SHINOZAKI, Atsushi**
**Kawasaki-shi**
**Kanagawa 211-8588 (JP)**

(74) Representative: **Stebbing, Timothy Charles et al**
**Haseltine Lake LLP**
**Lincoln House, 5th Floor**
**300 High Holborn**
**London WC1V 7JH (GB)**

(54) **RELAY DEVICE AND RELAY METHOD**

(57) A relay apparatus for relaying data transmitted and received between a transmitting station and a receiving station, including a discarding decision unit which measures a transmission delay amount in the receiving station on the basis of the feedback information from the receiving station, decides a discarding amount of the data based on the transmission delay amount for a session the transmission delay amount of which exceeds a threshold value, and discards data in the discarding amount among the data stored in a buffer.

## FIG. 3

FROM GATEWAY 120 OR THE LIKE — TO GATEWAY 120 OR THE LIKE

20

21 NETWORK-SIDE RECEPTION PORTION — NETWORK-SIDE TRANSMISSION PORTION

22 DATA STORAGE PORTION

23 CONGESTION JUDGMENT PORTION

24 DISCARDING DECISION PORTION

28 DELAY AMOUNT ESTIMATION PORTION

29

25 TRANSMISSION SCHEDULING PORTION

26 TRANSMISSION PORTION — RECEPTION PORTION 27

TO TERMINALS 50-0 TO 50-m — FROM TERMINALS 50-0 TO 50-m

**Description**

TECHNICAL FIELD

The present invention relates to a relay apparatus and to a relay method.

BACKGROUND ART

Wireless network systems conforming to the IEEE 802.11 standard (hereafter "wireless LAN systems"), and wireless network systems conforming to 3GPP (3rd Generation Partnership Project) standards (hereafter "cellular systems"), are representative examples of wireless network systems.

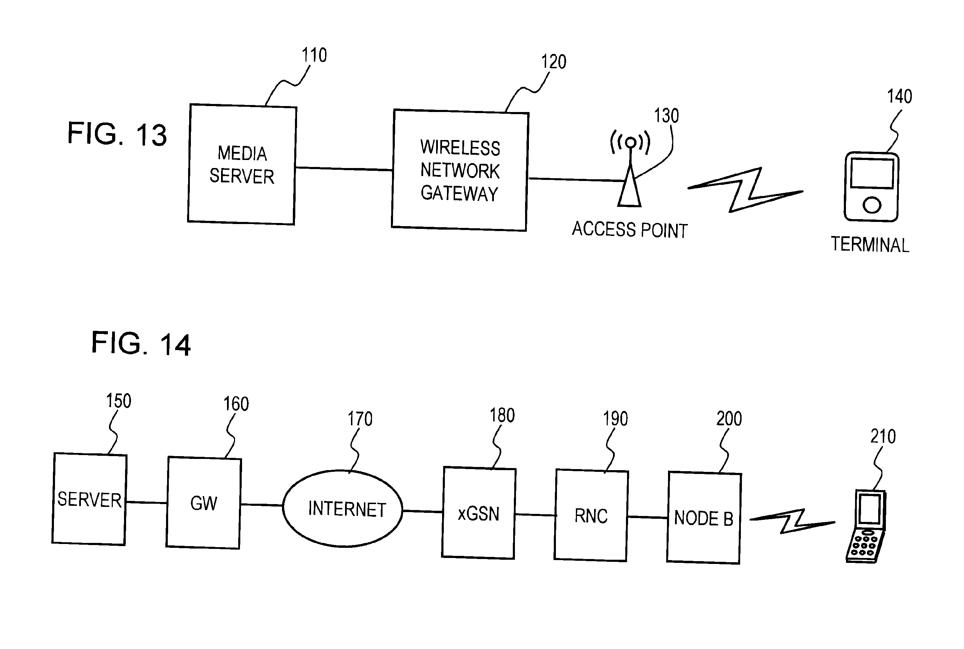

FIG. 13 and FIG. 14 depict examples of the configurations of a wireless LAN system and a cellular system respectively. As depicted in FIG. 13, in a wireless LAN system, streaming data (video, audio, and other data which can be reproduced even when not all of the data is received) and other data stored on a media server 110 is output to an access point 130 from a wireless network gateway 120 and is transmitted as wireless data to a terminal 140.

In the case of a cellular system such as depicted in FIG. 14, streaming data and other data stored on a server 150 is output from a gateway 160 to the Internet 170, and is transmitted as wireless data to UE (User Equipment) 210 from a NodeB 200, via an xGSN (x GPRS (General Packet Radio Service) Service Node) 180 which is a relay apparatus and an RNC (Radio Network Control) 190.

In a wireless LAN system, a plurality of access points 130 is arranged for one wireless network gateway 120. This is a so-called tree structure. In the cellular system as well, the plurality of RNCs 190 are connected to one xGSN 180, and a plurality of NodeB units 200 are connected to one RNC 190 in the tree structure. Hence data readily accumulates at wireless network gateways 120, and at xGSN units 180, RNC units 190, and other relay apparatuses. And, because a wireless access network has narrow bandwidth compared with wire access networks, this situation is further aggravated.

Also, with changes in the wireless environment and increases in the number of wireless access terminals, data accumulation similarly occurs readily in relay apparatuses (or relay stations) as well, as seen from the side of the wireless access network. For example, when resent control is performed between the terminal 140 or similar and the relay apparatus accompanying quality degradation, the transmission data enters a transmit wait state in the relay apparatus, and consequently data accumulation occurs. And, data accumulation also readily occurs when a plurality of terminals 140 or similar have requested access of the wireless network at the same time.

Such accumulation of data in the relay apparatus generally occurs particularly readily when the output rate is low compared with the input rate, and induces the occurrence of so-called congestion. Due to the occurrence of congestion, the relay apparatus discards subsequently received data due to buffer overflow.

Under such circumstances, in the prior art measures have ultimately been taken within the receiving apparatuses processing data.

For example, a packet reception apparatus is disclosed in which received packets are stored temporarily in packet storage means which forms a queue, and when the length of the queue increases and a readout-start threshold value is reached, readout of packets from the packet storage means is started, to reduce the effect of communication packet jitter (see for example Patent Reference 1 below).

And, a jitter buffer control method and IP telephone have been disclosed in which, by performing thinning (or expansion) of voice data from the jitter amount of received packets, jitter is absorbed, and sounds are smoothly connected on the decoding side (see for example Patent Reference 2 below).

Further, a packet reception control method is also disclosed in which ordering of packets which have arrived with a delay or similar is performed in an encoded voice buffer, and immediately prior to actually utilizing sampling data comprised by a packet stored in the encoded voice buffer, the packet is decoded by a voice data decoding processing unit and voice output is performed (see for example Patent Reference 3 below).

Further, an invention is disclosed in which a wireless pattern is detected in received data, marking of the wireless pattern is performed, and when it is necessary to dynamically modify the jitter buffer, a silent pattern is inserted immediately before the marked data or the marked data is erased (see for example Patent Reference 4 below).

Patent Reference 1: Japanese Laid-open Patent Publication No. 2001-274829
Patent Reference 2: Japanese Laid-open Patent Publication No. 2005-64873
Patent Reference 3: Japanese Laid-open Patent Publication No. 2006-121401
Patent Reference 4: Japanese Laid-open Patent Publication No. 2002-271391

DISCLOSURE OF THE INVENTION

PROBLEMS TO BE SOLVED BY THE INVENTION

As explained above, accumulation of data in the relay apparatus leads to the occurrence of congestion. When congestion occurs, data must be discarded.

Accordingly, it is an object in one aspect of the present invention to provide the prioritized discarding of data which is not effectively utilized in reproduction.

Furthermore, it is another object of the present invention to provide a relay apparatus and similar which improves the quality of wireless links.

MEANS FOR SOLVING THE PROBLEM

According to one aspect of the present invention, a relay apparatus for relaying data transmitted and received between a transmitting station and a receiving station, including: a discarding decision unit which discards a part of the relay-targeted data without relaying the part of the relay-targeted data to the receiving station, on the basis of feedback information from the receiving station.

According to one aspect of the present invention, a relay method in a relay apparatus which relays data transmitted and received between a transmitting station and a receiving station, including: discarding a part of the relay-targeted data without transmitting the part of the relay-targeted data to the receiving station, on the basis of feedback information from the receiving station.

According to one aspect of the present invention, a network system, comprising: a transmitting station; a receiving station; and a relay apparatus which relays data transmitted and received between the transmitting station and the receiving station, wherein the relay apparatus includes: a discarding decision unit which discards a part of the relay-targeted data without relaying the part of the relay-targeted data to the receiving station, on the basis of feedback information from the receiving station.

By means of the present invention, data which is not effectively utilized in reproduction can be given priority in discarding. Further, a relay apparatus and similar which improves the quality of wireless links can be provided.

BRIEF DESCRIPTION OF THE DRAWINGS

FIG. 1 depicts an example of the configuration of a network system;
FIG. 2 depicts another example of the configuration of a network system;
FIG. 3 depicts an example of the configuration of a relay apparatus;
FIG. 4A depicts an example of a data storage unit in the normal state and FIG. 4B depicts an example of a data storage unit in a congested state;
FIG. 5 depicts an example of jitter delay;
FIG. 6 depicts an example of the format of an RTCP-RR packet;
FIG. 7 is a flowchart depicting an example of overall processing;
FIG. 8 is a flowchart depicting an example of control object decision processing;
FIG. 9 depicts an example of the timing of data transmission and reception;
FIG. 10A through FIG. 10E depict examples of data arrangement when discarding in 25% increments of the calculated discarding amount;
FIG. 11A depicts an example of discarding a constant amount, FIG. 11B depicts an example of discarding at a constant fraction, and FIG. 11C depicts an example of discarding a constant amount or more;
FIG. 12 depicts an example of timing of data transmission and reception for a case including thinning processing;
FIG. 13 depicts an example of the configuration of a wireless LAN system;
FIG. 14 depicts an example of the configuration of a cellular system; and,
FIG. 15 depicts one proposal for discarding.

EXPLANATION OF REFERENCE NUMERALS

1 network system
10-1 to 10-n reception apparatuses

20 relay apparatuses
21 network-side reception unit
22 data storage unit
23 congestion judgment unit
24 discarding decision unit
25 transmission scheduling unit
26 transmission unit
27 reception unit
28 delay amount estimation unit
29 network-side transmission unit
30 transmission apparatus
40-0 to 50-n access point
50-0 to 50-m terminals

BEST MODE FOR CARRYING OUT THE INVENTION

One conceivable proposal, for example, would entail thinning data which has low impact on quality (or is of low importance) to perform discarding for transmission from a relay apparatus (or relay station) to a receiving station.

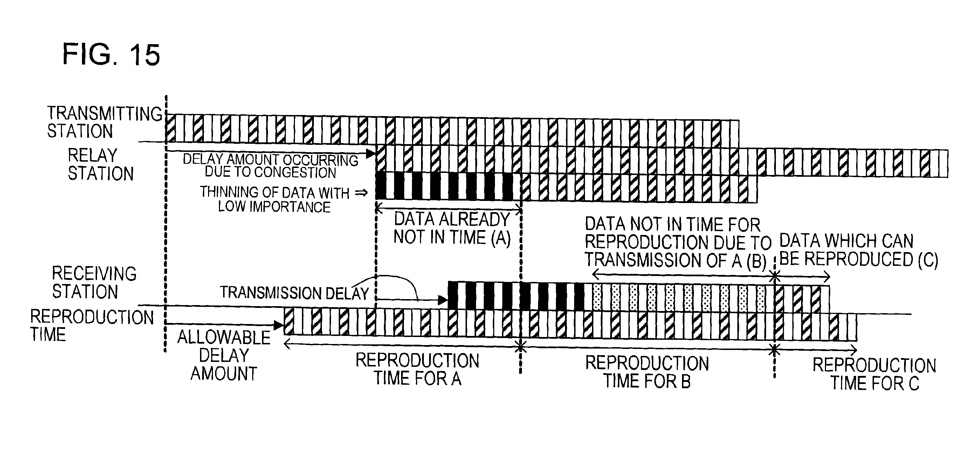

FIG. 15 depicts an example of the timing of data transmission and reception. In the figure, the horizontal axis represents time; an example of the arrangement of data at the transmitting station or similar is depicted. In this example, data is transmitted from the transmitting station (the media server 110, server 150, or similar) to a receiving station (the terminal 140, UE 210, or similar) via a relay station (the wireless network gateway 120, RNC 190, or similar).

As depicted in FIG. 15, data transmitted from the transmitting station is received by the relay station with a delay due to congestion. And at the relay station, due to congestion, data with low importance is thinned and transmitted. Of the data, data with high importance, indicated by oblique lines, is left unmodified, and one part in two of other data with low importance is discarded.

As data with low importance, for example, when realtime data is related to voice data, background noise information in the voice data can be handled as low-importance data; when realtime data is related to video data, non-reference picture data can be handled as low-importance data.

In this way, low-importance data can be discarded, and the effect of discarding at the reception apparatus can be reduced.

However, the receiving station receives data after a prescribed time has elapsed due to a transmission delay, but there are also cases in which the receiving station receives at a time at which the allowable delay amount has been exceeded. In the case, the leading data series A, which is important data which has been left after thinning processing, is received by the receiving station, but does not arrive by the reproduction time, so that the data cannot be reproduced. Further, due to delay of the data series A, the data series B following thereafter also cannot be received by the time of the start of reproduction, and cannot be reproduced. And, in the stage at which the data series C is received, the data finally arrives by the time of the start of reproduction, and the data series C can be reproduced.

Despite the fact that the data series A and data series B are thinned and then transmitted, they cannot be reproduced on the receiving side, and as a result unnecessary data is transmitted.

Hence in the next embodiments, this problem is considered.

A preferred embodiment for implementing the present invention is explained below.

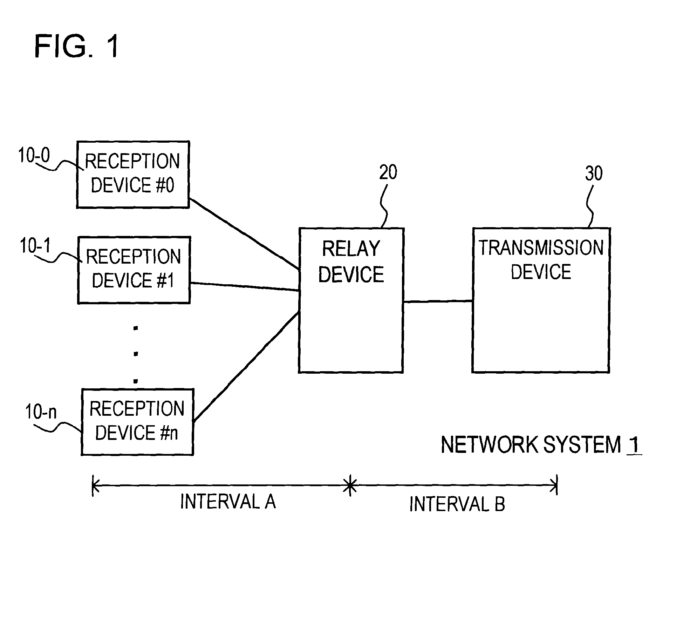

FIG. 1 depicts an example of the configuration of a network system 1. The network system 1 includes reception apparatuses 10-0 to 10-n, a relay apparatus 20, and a transmission apparatus 30. In the interval A between the reception apparatuses 10-0 to 10-n and the relay apparatus 20, situations can occur in which data transmission speeds are slower than in the interval B between the relay apparatus 20 and the transmission apparatus 30. For example, transmission over the interval A is performed wirelessly, and transmission over the interval B is performed by wire transmission. In this case, the reception apparatuses 10-0 to 10-n may be portable phones, PDAs (Personal Digital Assistants), or other portable information terminals, and the transmission apparatus 30 may be a server (the media server 110 or server 150 in FIG. 14) or similar. Conversely, there may be cases in which transmission speeds are slower over interval B than over interval A. In this case, the transmission apparatus 30 may be a portable terminal or similar, and the reception apparatuses 10-1 to 10-n may be servers. In the embodiment, implementation is possible in either case.

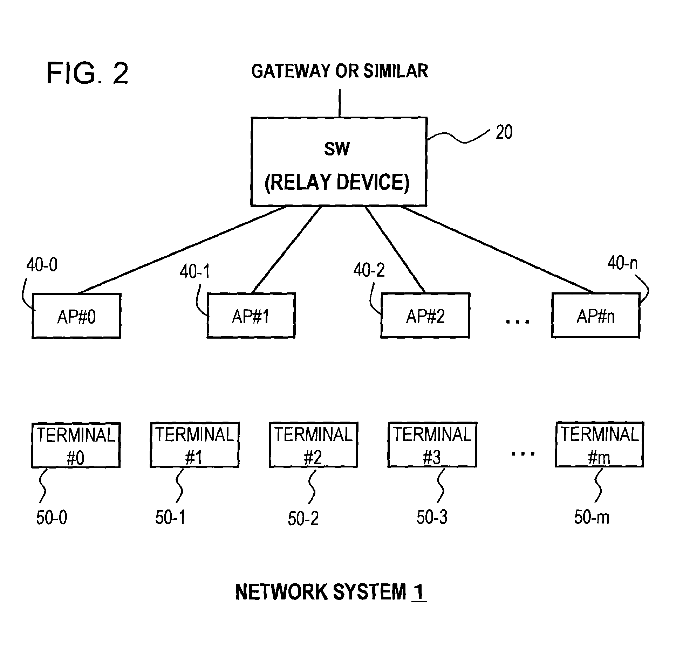

FIG. 2 depicts another example of the configuration of the network system 1. The network system 1 includes the relay apparatus (switch SW) 20, a plurality of access points (AP#0 to AP#n) 40-0 to 40-n, and a plurality of terminals (terminal #0 to terminal #m) 50-0 to 50-m. The network system 1 is a configuration of the above-described wireless LAN system (see FIG. 13).

The relay apparatus 20 includes a plurality of subordinate access points 40-0 to 40-n, as depicted in FIG. 2. The relay apparatus 20 controls terminal-bound data from the server 110 so as to be transmitted to access points 40-0 to 40-n governing the terminal. For example, when the access point (AP#0) 40-0 governs the plurality of terminals (#0 to #m) 50-0 to 50-m, the relay apparatus 20 outputs terminal-bound data to the access point (AP#0) 40-0.

The relay apparatus 20 is further connected, via a higher-level wireless network gateway 120, an L3 switch and similar, to the server 110. The relay apparatus 20 may be positioned between the wireless network gateway 120 and the access point 130, or the wireless network gateway 120 may have the functions of the relay apparatus 20 therewithin.

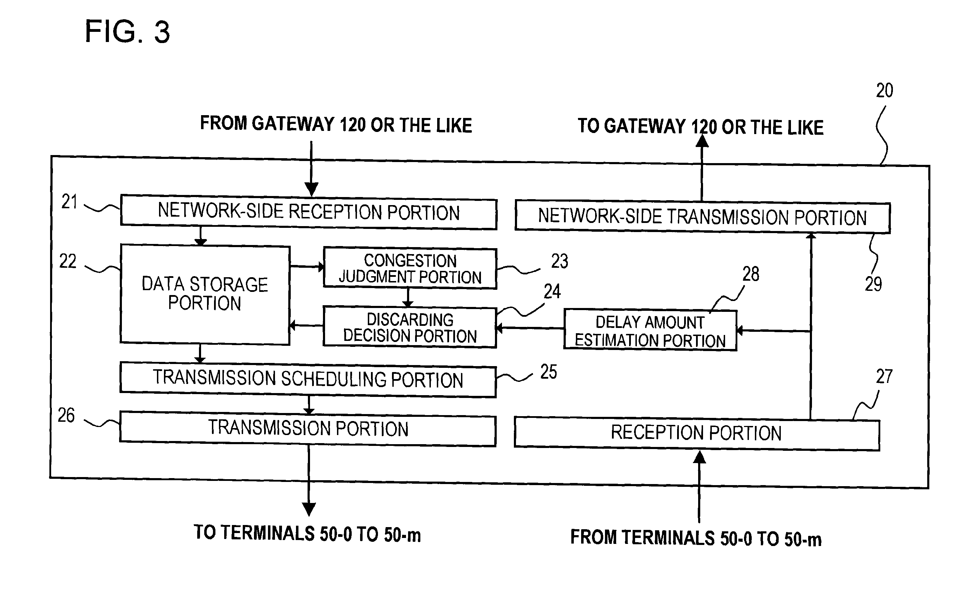

FIG. 3 depicts an example of the configuration of the relay apparatus 20. The relay apparatus 20 includes a network-side reception unit 21, data storage unit 22, congestion judgment unit 23, discarding decision unit 24, transmission scheduling unit 25, transmission unit 26, reception unit 27, delay amount estimation unit 28, and network-side transmission unit 29.

The network-side reception unit 21 receives data from the network connected to the relay apparatus 20 (for example, from a wireless network gateway 120 or similar). Received data is for example IP (Internet Protocol) packets, with streaming data inserted into the IP packets.

The data storage unit 22 stores data received by the network-side reception unit 21. The data storage unit 22 also discards a constant quantity of data according to instructions from the discarding decision unit 24. A detailed explanation is given below.

The congestion judgment unit 23 monitors data stored in the data storage unit 22, and judges whether the network is in a congested state. Here, the congestion judgment unit 23 more generally judges whether data stored in a buffer must be discarded; here, the necessity of discarding is evaluated with the amount of data stored as a parameter, but other parameters can also be used to judge the necessity of discarding.

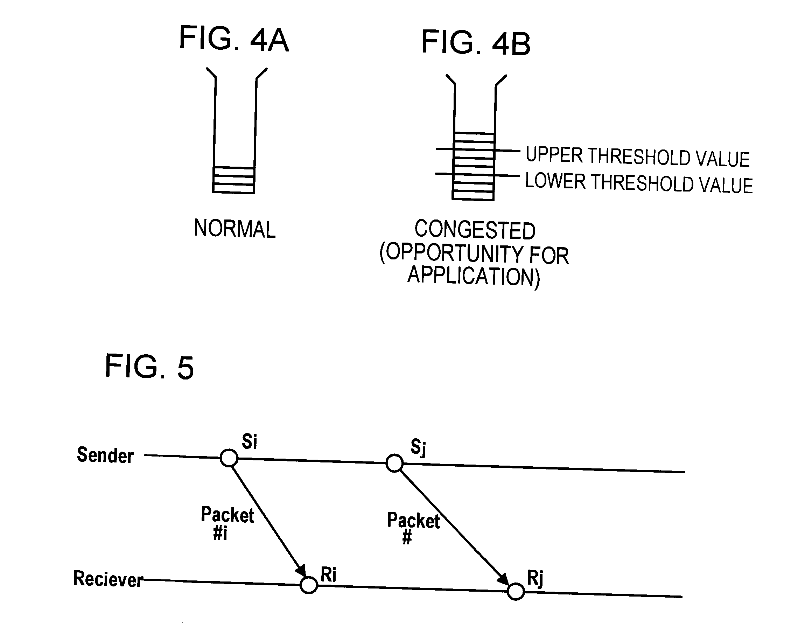

FIG. 4A depicts the situation in the data storage unit 22 in the normal state; FIG. 4B depicts the situation in the data storage unit 22 in the congested state. The congestion judgment unit 23 provides two threshold values, which are an upper threshold value and a lower threshold value, for the amount of data accumulated in the data storage unit 22, and upon judgment that the upper threshold value has been exceeded, judges that the state is the congested state, but when the amount falls below the lower threshold value judges that the state is the congestion recovery state. Various other judgment methods may be employed as well, such as for example a method in which judgments employ only the upper threshold value, or a method of judging whether the threshold value is exceeded for a certain constant time period. The congestion judgment unit 23 notifies the discarding decision unit 24 of the result of judgment.

Returning to FIG. 3, upon receiving a congestion state judgment result from the congestion judgment unit 23, the discarding decision unit 24 issues a request to the data storage unit 22 for data discarding, for the object of a session the delay amount of which is equal to or greater than a constant amount (equal to or greater than a threshold value). A detailed explanation is given below. A session is a communication path between the terminal 50-0 to 50-m and relay apparatus 20 (or server 110), from the time of establishment of communication between the terminal 50-0 to 50-m and relay apparatus 20 or similar, until communication is disconnected.

The transmission scheduling unit 25 decides scheduling for transmission of data to the terminals 50-0 to 50-m, and outputs data read-out from the data storage unit 22 to the transmission unit 26 according to the transmission schedule thus decided.

The transmission unit 26 transmits transmission data to the terminals 50-0 to 50-m according to the transmission schedule.

The reception unit 27 receives data from the terminals 50-0 to 50-m, and outputs the data to the network-side transmission unit 29. When, among the data received from the terminals 50-0 to 50-m, feedback information is received, the reception unit 27 outputs all of or a unit of this feedback information to the delay amount estimation unit 28. Feedback information is explained below.

The delay amount estimation unit 28 calculates the delay amount from the feedback information. FIG. 5 is used to explain an example of a method of calculating the delay amount. As depicted in the figure, a packet #i is transmitted at time Si from the transmission side (a (media) server or other data transmission apparatus or relay station), and the packet #i is received at time Ri on the receiving side (a terminal or other reception apparatus). And, a packet #j is transmitted at time Sj from the transmission side, and the packet #j is received at the time Rj on the receiving side. At this time, the jitter (variation in transmission delay) on the receiving side is measured by the reception apparatus according to

$$D(i,j) = (Rj-Ri) - (Sj-Si) = (Rj-Sj) - (Ri-Si)$$

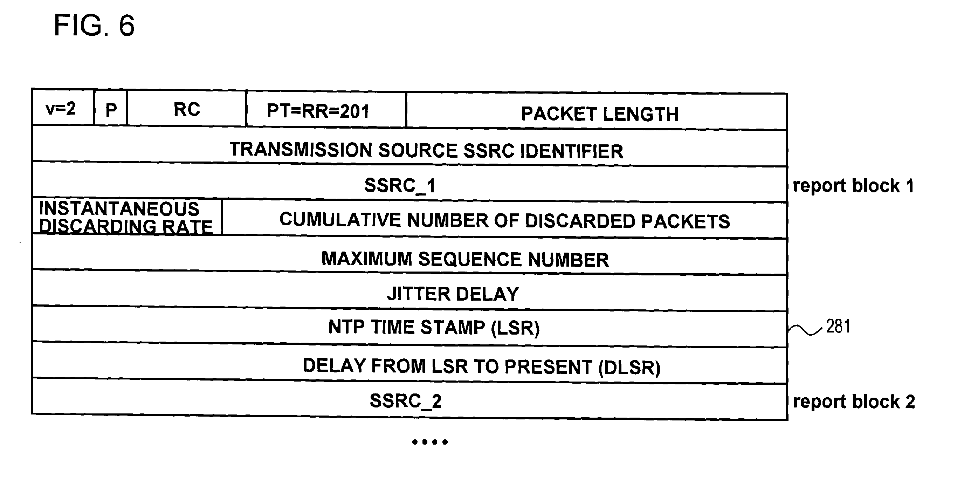

This measured jitter value is transmitted as feedback information from the receiving side to the transmitting side, that is, from the terminals 50-0 to 50-m to the reception unit 27 of the relay apparatus 20 (transmission apparatus). In data transmission and reception, feedback information can be inserted into a field into which a time stamp is inserted, and into the time stamp field in the RTP header, in RTCP-RR (Receiver Report) packets when using RTP (Realtime-Transfer Protocol)/RTCP (Realtime Transfer Control Protocol) conforming to RFC 1889/1890, and the feedback information can be transmitted to the relay apparatus 20. FIG. 6 depicts an example of the format of an RR-RTCP packet. Feedback information is inserted into the NTP (Network Time Protocol) time stamp field 281. Normally NTP is used in round trip calculation, but in this example, is used as an available area in cases in which such calculations are not performed. Depending on protocol constraints, jitter values may be stored using protocol expansion areas.

The delay amount estimation unit 28 calculates the delay amount on the basis of feedback information from the reception unit 27. For example, the delay amount estimation unit 28 calculates the delay amount by totaling jitter values. Calculated jitter values are held in memory or similar as the latest delay amount. Jitter values can take + or - values with respect to a reference value (in the embodiment, the reference value of the transmission delay), and so by totaling these values, the delay amount of transmission delay for a wireless link can be measured.

That is, in the initial stage data transmission from the transmission apparatus to the reception apparatus is performed within the allowable time, but when delays begin to occur, positive jitter values are detected, and conversely when delays are decreased negative jitter values are detected. Hence by integrating these values, it is possible to detect the extent to which a delay which cannot be allowed is added.

Here, jitter values are used; but it is sufficient that, at least in the relay station, data which is too late for reproduction even when transmitted to the receiving station can be identified. For example, the receiving station measures the transmission time of data transmitted from the relay station to the receiving station (determines by subtracting the transmission time contained in the data from the time of reception), and reports the result to the relay station.

The network-side transmission unit 29 outputs data received by the reception unit 27 from the terminals 50-0 to 50-m to the network.

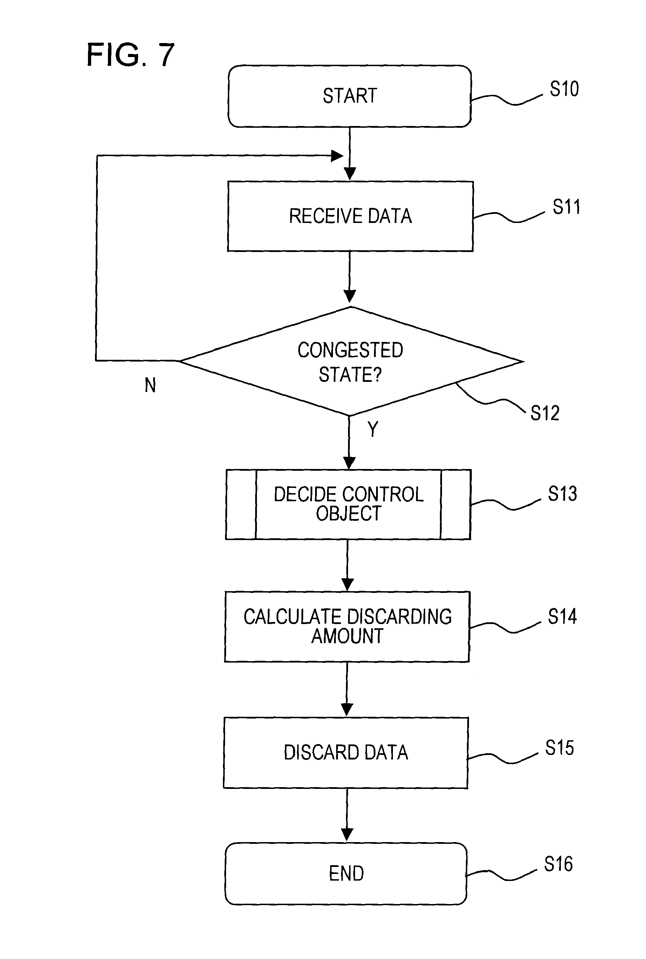

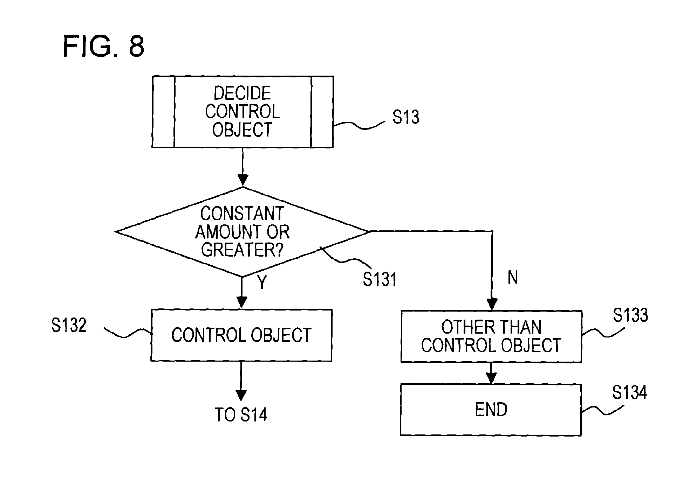

Next, in the network system 1 configured in this way, operation in the relay apparatus 20 in particular is explained. FIG. 7 and FIG. 8 are flowcharts depicting an example of operation in the relay apparatus 20.

As depicted in FIG. 7, when the relay apparatus 20 starts this processing (S10), the network-side reception unit 21 receives data from the network (S11), and the reception unit 27 also receives data from the terminals 50-0 to 50-m.

Next, the congestion judgment unit 23 judges whether the network is in the congested state (S12). As explained above, the congestion judgment unit 23 may for example perform this judgment based on the amount of data accumulated in the data storage unit 22 and on a threshold value.

When the network is not in the congested state (N in S12), processing again returns to 511, and data is received. If on the other hand the network is in the congested state (Y in S12), the discarding decision unit 24 performs control object decision processing (S13). FIG. 8 is a flowchart which explains in detail this control object decision processing.

The discarding decision unit 24 judges whether the delay amount from the delay amount estimation unit 28 is equal to or greater than a constant amount (5131). As explained above, the discarding decision unit 24 performs this judgment by totaling jitter values from the delay amount estimation unit 28, taking the total value to be the delay amount, and judging whether the delay amount is equal to or greater than a threshold value.

When the delay amount is greater than or equal to the constant amount (Y in S131), the discarding decision unit 24 decides that the session with delay amount equal to or greater than the constant amount is an object for control (S132). When on the other hand the delay amount is no equal to or greater than the constant amount (N in S131), the discarding decision unit 24 does not take the session to be an object for control (S133), and the series of processing is ended (S134).

Upon deciding on a control object session, the discarding decision unit 24 calculates the discard amount (S14 in FIG. 7). The discard amount is for example calculated as follows. When "100 bytes" are output with a period of "20 ms" from the data storage unit 22 or from the transmission unit 26, and it is calculated from the delay amount that the arrival timing is delayed by "100 ms" relative to the reproduction timing (this estimation can also be performed by detecting that the integrated value of jitter values has reached 100 ms), the discard amount becomes "500 bytes". Calculation of the discard amount is one example; it is sufficient that discard amount be calculated based on delay amounts obtained from feedback information. The discarding decision unit 24 requests discard processing by the data storage unit 22 based on discard amounts decided in this way. At this time, the discard amount is also specified. That is, based on feedback information, the amount of data which probably cannot contribute to reproduction at the receiving station is calculated, and discarding of this data amount is performed.

In cases in which information on the time at which data is to be reproduced is included in data being relayed at the time of discarding, an instruction can be issued to perform discarding of data for which the time equal to the current time plus the transmission time (the transmission time from the relaying station to the receiving station) exceeds the time indicated by the reproduction time information.

Further, if what is to be discarded is data which is not expected to arrive by the time for reproduction, then important data may also be discarded. An example of data of high importance may be, in a case in which realtime data is related to voice information, non-silent data other than background noise information among voice data, or similar, or in a case in which realtime data is related to video data, a reference picture or similar.

Next, the data storage unit 22 discards data in the requested discarding amount for the session requested by the discarding decision unit 24 (S15). Discarding is for example performed starting from old data (in the case of a FIFO format, the earliest stored data, or the data which was the first to arrive at the relay apparatus 20), that is, starting from data which does not contribute to reproduction at the receiving station (terminals 50-0 to 50-m), or data for which such a possibility is extremely low.

And, the series of processing ends (S16). Thereafter, the relay apparatus 20 transmits from the transmission unit 26 to the terminal apparatuses 50-0 to 50-m the data excluding the discarded data.

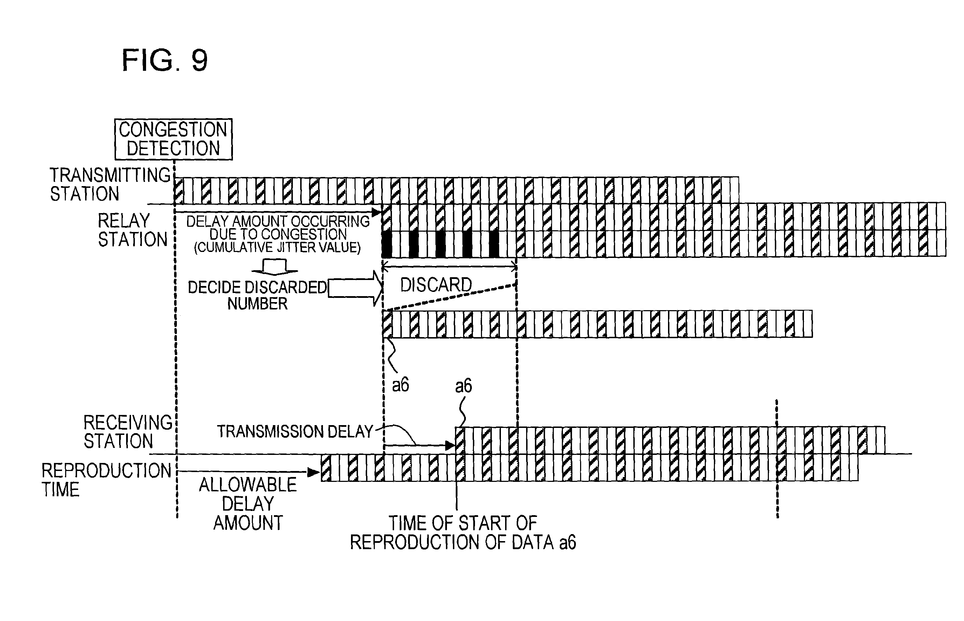

FIG. 9 depicts an example of the timing of data transmission and reception in this embodiment. Data is transmitted from the transmitting station (the server 110 or similar), and the data is received at the relay station (the relay apparatus 20), delayed by a delay amount due to the occurrence of congestion. At the relay apparatus 20, the delay amount of the transmission delay is known based on the fed-back delay amount, and so the amount of data which will not arrive in time for reproduction is decided by the above-described processing (in the example of FIG. 9, 15 packets, including important packets, indicated in black), and data remaining after discarding is transmitted to the receiving station (terminals 50-0 to 50-m). At the receiving station, although data is received with a delay due to the transmission delay, the leading unit (a6) of the data remaining after discarding is in time for reproduction of the leading unit of data remaining after discarding when the delay is within the allowable delay amount (timing of reproduction of data a6), and subsequent data can also be reproduced.

In this way, the relay apparatus 20 in the embodiment discards data based on delay amounts when the wire access-side network is in the congested state and the transmission delay amount in the wireless-side network is equal to or greater than a constant amount; hence data of the delay amount is not transmitted, and transmission of data which is not necessary for reproduction can be avoided. Moreover, opportunities for transmission of data not necessary for reproduction can be suppressed, so that reductions in the transmission rate at wireless links can be suppressed, and the quality at wireless links can be improved.

It is desirable that when the transmission delay amount is equal to or less than a constant value, even when the state is the congested state, the relay apparatus 20 not perform data discarding processing. This is because if the transmission delay is small, data transmission and reception can be performed so as to be in time for the start of reproduction.

Here, data discarding is considered. It is desirable that data discarding be performed taking into consideration the timing of reproduction at the receiving station. Hence it is desirable that the jitter cumulative value be observed from the start times of communication with each of the terminals 50-0 to 50-m, and that the data (data amount) which is not in time for reproduction at the receiving station when the delay indicated by the jitter cumulative value occurs be discarded. Of course, when it is possible to accurately estimate the amount of data equivalent to the delay amount, the necessary data amount can be discarded at once; but there are also cases in which, due to the application or other circumstances, the estimated delay amount is not necessarily appropriate. In such cases, for example, the discarding amount can also be decided based on the cumulative result including the jitter value received the next time.

Here, where data discarding is concerned, the data amount can be divided into certain fractions and eliminated, rather than discarding the data all at once. This is because even if all the discarding amount is not eliminated, in a communication environment which changes in realtime, there are also cases in which data delivery can be performed so as to be in time for reproduction. Further, there are cases in which transmission rate adjustment is performed in the transmission-side relay apparatus 20 based on feedback from the receiving side, and from this too, alleviation of congestion may be expected. Further, cases are also conceivable in which, during discarding of a unit of the data, recovery from congestion is detected by the congestion judgment unit 23.

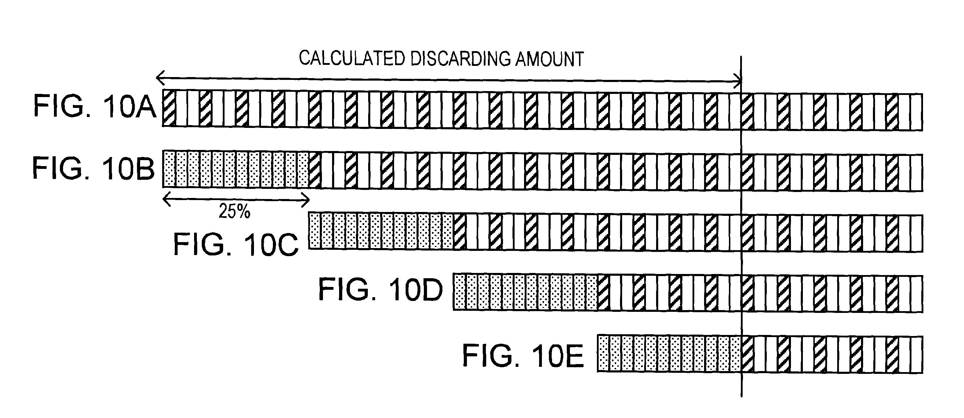

FIG. 10A through FIG. 10E depict an example in which the calculated discarding amount is divided into 25% units for discarding. The discarding decision unit 24, after deciding the discarding amount (see FIG. 10A), requests that the data storage unit 22 discard, for example, 25% of this. The data storage unit 22 discards 25% of the data based on this request (see FIG. 10B), and at a constant period repeats this processing a plurality of times (FIG. 10C through FIG. 10E). Of course, this is one example of divided discarding; discarding of 30% of the data may be repeated three times, with the remaining data finally discarded, or similar.

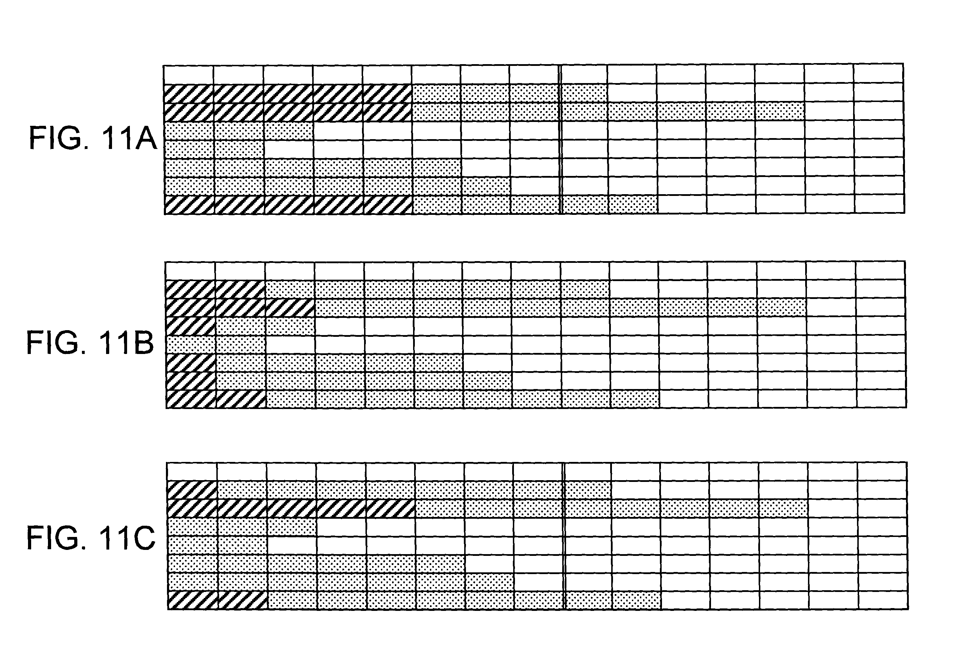

Four types of data discarding performed by the discarding decision unit 24 and data storage unit 22 are conceivable. These are 1) discarding of all data; 2) discarding of only a constant amount; 3) discarding at a constant fraction; and, 4) discarding a constant amount or more. Of these, FIG. 11A is an example of discarding only the constant amount; FIG. 11B is an example of discarding at a constant fraction; and FIG. 11C is an example of discarding the constant amount or more. Rectangles described by oblique lines represent discarded data.

As depicted in FIG. 11A, when discarding the constant amount of data, if the data amount exceeds a threshold value (in FIG. 11A, indicated by a double line; the threshold value is for a delay amount, and is equivalent to the constant amount in S131 of FIG. 8), then, for example, the five old data units indicated by oblique lines (the constant amount of data) are discarded. Upon exceeding the threshold value, five data units are discarded, regardless of the data amount.

When discarding at the constant fraction, as depicted in FIG. 11B, the constant fraction of the data amount is discarded; that is, for nine data units, the two units represented by oblique lines are discarded, and for 12 data units, the three old data units represented by oblique lines are discarded.

Further, when discarding the constant amount or greater, as depicted in FIG. 11C, the data amount exceeding the delay amount is decided upon as an amount for discarding, and old data represented by oblique lines is discarded.

In all cases, in the discarding decision unit 24 the amount equivalent to the delay amount is decided as the discarding amount based on the delay amount determined from the cumulative jitter value, and when the delay amount exceeds the threshold value a predetermined constant amount is decided as the discarding amount (FIG. 11A), or a constant fraction of the data amount is decided as the discarding amount (FIG. 11B), or the amount by which the delay amount exceeds the threshold value is decided as the discarding amount. The data storage unit 22 discards data based on the amount decided in these ways.

In these cases, examples of divided discarding (FIG. 10A through FIG. 10E) may be combined. For example, in the example of FIG. 11A, the data to be discarded may be divided five times into one unit each and discarded, or similar.

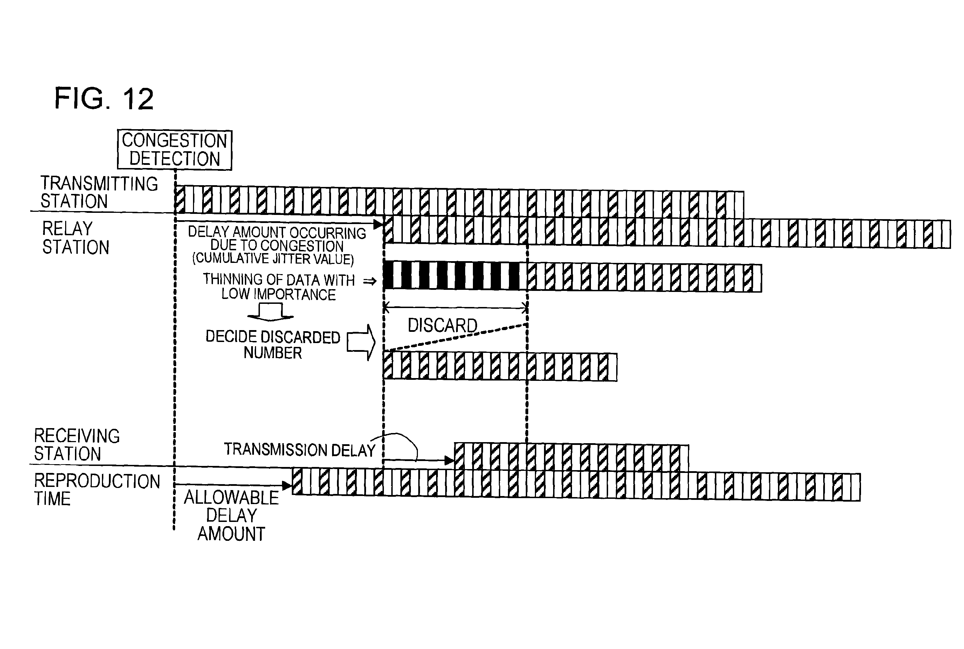

In all of the examples explained above, examples of data discarding based on delay amounts is explained. For example, as depicted in FIG. 12, processing combined with well-known thinning processing may be performed. In other words, in the relay apparatus 20, data of high importance among the data from the network is left, and data of low importance is thinned and eliminated at a constant fraction. Then, when the delay amount reaches or exceeds a constant amount, the relay apparatus 20 performs discarding including data which had remained after thinning. Thinning processing may for example be performed such that data for thinning is decided by the discarding decision unit 24, and data thinning is actually performed in the data storage unit 22. After thinning, the processing is similar to that of the above-described examples, so that subsequent implementation is similar to that of the above examples, and similar advantageous results are obtained.

Further, in the above-described examples, examples are explained in which the network system 1 is a wireless LAN. Of course, implementation is possible even when the network system 1 is a cellular system.

Further, in the above-described examples, jitter values are explained as examples of feedback information. In addition to this, for example, direct cumulative values may be fed back from the receiving station to the relay station as feedback information. In this case, the delay amount calculation processing by the delay amount estimation unit 28 is reduced, and moreover the delay amount estimation unit 28 itself can be omitted, processing can be speeded, and the cost of the relay apparatus 20 itself can be lowered. In this embodiment, apart from jitter values and cumulative values, any other delay information indicating transmission delays can be used as feedback information.

Further, in the above-described examples, data relayed by the relay apparatus 20 is explained as streaming data. The data may be other data for which realtime handling is required.

Further, in the above-described examples, explanations assumed wireless data transmission and reception from a relay apparatus 20 to terminals 50-0 to 50-m. In addition, data transmission and reception by wire may be employed. If data transmission speeds are slow for the network to which the relay apparatus 20 is connected, the embodiment can be implemented for both wireless and wire communication. In this case, quality can be improved in the network with the slower transmission speeds.

**Claims**

1. A relay apparatus for relaying data transmitted and received between a transmitting station and a receiving station, comprising:

   a discarding decision unit which discards a part of the relay-targeted data without relaying the part of the relay-targeted data to the receiving station, on the basis of feedback information from the receiving station.

2. The relay apparatus according to claim 1, further comprising:

   a congestion judgment unit which judges whether congestion is occurring in a network connected with the transmitting station, wherein
   the discarding decision unit measures a transmission delay amount in the receiving station on the basis of the feedback information, decides a discarding amount of the data based on the transmission delay amount for a session the transmission delay amount of which exceeds a threshold value when the congestion judgment unit judges that the congestion is occurring, and discards data in the discarding amount among the data stored in a buffer.

3. The relay apparatus according to claim 1, wherein the discarding decision unit decides a discarding amount in a predetermined constant amount as the discarding amount of the data.

4. The relay apparatus according to claim 1, wherein the discarding decision unit decides data at a predetermined constant fraction of the data amount of the data as the discarding amount of the data.

5. The relay apparatus according to claim 1, wherein the discarding decision unit decides the amount of the data exceeding the threshold value as the discarding amount of the data.

6. The relay apparatus according to claim 1, wherein the discarding decision unit divides and then discards the data in the discarding amount.

7. The relay apparatus according to claim 6, wherein the discarding decision unit halts discarding of the data, if divides and discards the data in the discarding amount, upon judgment by the congestion judgment unit that the congestion is not occurring.

8. The relay apparatus according to claim 1, wherein the discarding decision unit thins the data transmitted from the transmitting station, and discards data in the discarding amount among the data after thinning.

9. The relay apparatus according to claim 1, wherein the discarding decision unit discards the data in the order of earliest arrival at the relay apparatus.

10. The relay apparatus according to claim 1, wherein the discarding decision unit does not perform the discarding for the session unless the transmission delay amount exceeds the threshold, even when the congestion judgment unit judges that the congestion is occurring.

11. The relay apparatus according to claim 1, wherein the feedback information is a jitter value of transmission delay in the receiving station, and the discarding decision unit measures a cumulative value of the jitter value as the transmission delay amount.

12. The relay apparatus according to claim 1, wherein the data is streaming data which can be reproduced even when not all data is received at the receiving station.

13. A relay method in a relay apparatus which relays data transmitted and received between a transmitting station and a receiving station, comprising:

discarding a part of the relay-targeted data without transmitting the part of the relay-targeted data to the receiving station, on the basis of feedback information from the receiving station.

14. A network system, comprising:

a transmitting station;
a receiving station; and
a relay apparatus which relays data transmitted and received between the transmitting station and the receiving station, wherein
the relay apparatus includes:

a discarding decision unit which discards a part of the relay-targeted data without relaying the part of the relay-targeted data to the receiving station, on the basis of feedback information from the receiving station.

# FIG. 1

**10-0** RECEPTION DEVICE #0

**10-1** RECEPTION DEVICE #1

**10-n** RECEPTION DEVICE #n

**20** RELAY DEVICE

**30** TRANSMISSION DEVICE

NETWORK SYSTEM 1

INTERVAL A | INTERVAL B

FIG. 2

GATEWAY OR SIMILAR

SW
(RELAY DEVICE)

20

40-0 AP#0

40-1 AP#1

40-2 AP#2

. . .

40-n AP#n

| TERMINAL #0 | TERMINAL #1 | TERMINAL #2 | TERMINAL #3 | . . . | TERMINAL #m |

50-0    50-1    50-2    50-3    50-m

NETWORK SYSTEM 1

FIG. 3

TO GATEWAY 120 OR THE LIKE

FROM GATEWAY 120 OR THE LIKE

20

NETWORK-SIDE TRANSMISSION PORTION 29

DELAY AMOUNT ESTIMATION PORTION 28

RECEPTION PORTION 27

FROM TERMINALS 50-0 TO 50-m

NETWORK-SIDE RECEPTION PORTION 21

CONGESTION JUDGMENT PORTION 23

DISCARDING DECISION PORTION 24

DATA STORAGE PORTION 22

TRANSMISSION SCHEDULING PORTION 25

TRANSMISSION PORTION 26

TO TERMINALS 50-0 TO 50-m

# FIG. 4A

NORMAL

# FIG. 4B

— UPPER THRESHOLD VALUE
— LOWER THRESHOLD VALUE

CONGESTED
(OPPORTUNITY FOR
APPLICATION)

# FIG. 5

EP 2 159 976 A1

# FIG. 6

| v=2 | P | RC | PT=RR=201 | PACKET LENGTH | |
|---|---|---|---|---|---|
| TRANSMISSION SOURCE SSRC IDENTIFIER | | | | | |
| SSRC_1 | | | | | report block 1 |
| INSTANTANEOUS DISCARDING RATE | | CUMULATIVE NUMBER OF DISCARDED PACKETS | | | |
| MAXIMUM SEQUENCE NUMBER | | | | | |
| JITTER DELAY | | | | | |
| NTP TIME STAMP (LSR) | | | | | ⌇281 |
| DELAY FROM LSR TO PRESENT (DLSR) | | | | | |
| SSRC_2 | | | | | report block 2 |

• • • •

# FIG. 7

```
        START                    S10
          |
          v
    RECEIVE DATA                 S11
          |
          v
     CONGESTED                   S12
   N --- STATE? --- Y
          |
          v
   DECIDE CONTROL               S13
      OBJECT
          |
          v
  CALCULATE DISCARDING          S14
        AMOUNT
          |
          v
    DISCARD DATA                S15
          |
          v
        END                     S16
```

# FIG. 8

```
        ┌───────────────┐
        ║    DECIDE      ║
        ║    CONTROL     ║ ──── S13
        ║    OBJECT      ║
        └───────────────┘
                │
                ▼
          ◇─────────────◇
         ╱   CONSTANT    ╲──────────────┐
        ◇   AMOUNT OR     ◇             │
         ╲   GREATER?    ╱              │
          ◇─────────────◇  S131        │
                │ Y                     │ N
                ▼                       ▼
S132 ── ┌───────────────┐   ┌───────────────────┐ ── S133
        │ CONTROL OBJECT │   │   OTHER THAN       │
        └───────────────┘   │  CONTROL OBJECT    │
                │           └───────────────────┘
                ▼                     │
            TO S14                    ▼
                            ┌───────────────────┐ ── S134
                            │       END          │
                            └───────────────────┘
```

# FIG. 9

CONGESTION
DETECTION

TRANSMITTING
STATION

RELAY
STATION

DELAY AMOUNT OCCURRING
DUE TO CONGESTION
(CUMULATIVE JITTER VALUE)

DECIDE DISCARDED
NUMBER

DISCARD

a6          a6

RECEIVING
STATION

TRANSMISSION DELAY

REPRODUCTION
TIME

ALLOWABLE
DELAY
AMOUNT

TIME OF START OF
REPRODUCTION OF DATA a6

CALCULATED DISCARDING AMOUNT

FIG. 10A

FIG. 10B

25%

FIG. 10C

FIG. 10D

FIG. 10E

FIG. 11A

FIG. 11B

FIG. 11C

# FIG. 12

CONGESTION DETECTION

TRANSMITTING STATION

RELAY STATION

DELAY AMOUNT OCCURRING DUE TO CONGESTION (CUMULATIVE JITTER VALUE)

THINNING OF DATA WITH LOW IMPORTANCE ⇒

DISCARD

DECIDE DISCARDED NUMBER ⇨

RECEIVING STATION

TRANSMISSION DELAY

REPRODUCTION TIME

ALLOWABLE DELAY AMOUNT

EP 2 159 976 A1

FIG. 13

FIG. 14

# FIG. 15

TRANSMITTING STATION

RELAY STATION

DELAY AMOUNT OCCURRING DUE TO CONGESTION

THINNING OF DATA WITH ⇒ LOW IMPORTANCE

DATA ALREADY NOT IN TIME (A)

DATA NOT IN TIME FOR REPRODUCTION DUE TO TRANSMISSION OF A (B)

DATA WHICH CAN BE REPRODUCED (C)

RECEIVING STATION

TRANSMISSION DELAY

REPRODUCTION TIME

ALLOWABLE DELAY AMOUNT

REPRODUCTION TIME FOR A

REPRODUCTION TIME FOR B

REPRODUCTION TIME FOR C

EP 2 159 976 A1

## INTERNATIONAL SEARCH REPORT

| | International application No. |
|---|---|
| | PCT/JP2007/000543 |

A. CLASSIFICATION OF SUBJECT MATTER
*H04L13/08* (2006.01) i

According to International Patent Classification (IPC) or to both national classification and IPC

B. FIELDS SEARCHED

Minimum documentation searched (classification system followed by classification symbols)
H04L13/08

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2005-101873 A (Sanyo Electric Co., Ltd.),<br>14 April, 2005 (14.04.05),<br>Full text; all drawings<br>(Family: none) | 1,12-14<br>2-11 |
| A | JP 2005-51709 A (Sony Corp.),<br>24 February, 2005 (24.02.05),<br>Full text; all drawings<br>(Family: none) | 1-14 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 August, 2007 (10.08.07) | 21 August, 2007 (21.08.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001274829 A
- JP 2005064873 A
- JP 2006121401 A
- JP 2002271391 A